# EUROPÄISCHE PATENTSCHRIFT

(11) **EP 0 494 356 B1**
(45) Veröffentlichungstag und Bekanntmachung des Hinweises auf die Patenterteilung: **04.10.1995**
(21) Anmeldenummer: 91119217.7
(22) Anmeldetag: 12.11.1991
(51) Int. Cl.: B60J 7/06

(54) **Faltdach für Fahrzeuge**
Foldable roof for vehicle
Toit pliant pour véhicule

(30) Priorität: 24.12.1990 DE 4041763
(43) Veröffentlichungstag der Anmeldung: 15.07.1992
(73) Patentinhaber: Webasto AG Fahrzeugtechnik, D-82131 Stockdorf (DE)
(72) Erfinder: Jardin, Hans, W-8054 Inning (DE); Schwab, Günther, W-8027 Neuried (DE); Prem, Bernhard, W-8000 München 70 (DE)
(74) Vertreter: Wiese, Gerhard

(56) Entgegenhaltungen:
- EP-A- 0 336 414
- DE-A- 3 723 452
- GB-A- 431 285

## Beschreibung

Die Erfindung bezieht sich auf ein Faltdach für Fahrzeuge zum wahlweisen Verschließen oder mindestens teilweisen Freigeben einer in einer festen Dachfläche ausgebildeten Dachöffnung gemäß dem Oberbegriff des Patentanspruchs 1.

Ein derartiges Fahrzeugdach ist aus der GB-A-0431285 bekannt. Bei diesem ist eine Längsführung mit einem oberen Führungskanal vorgesehen, in den ein Teil eines Führungsblockes gleitend eingreift. Die obere Längsführungsbegrenzung dient zur Führung des Führungsblockes, ist jedoch nicht dazu vorgesehen, den Kettengliedern zwangsgesteuerte Ausstell- bzw. Einklappbewegungen aufzuzwingen.

Aus der DE-A-37 23 452 ist ein Schiebeverdeckgestell für Lastfahrzeuge bekannt, bei dem in seitlichen Gleitschienen mehrere Lagerstücke mit angelenkten Planenhebearmen verschieblich angeordnet sind. Ein zusammengehöriges Paar von Planenhebearmen weist dort eine gleiche Länge auf, sodaß bei geöffneter Plane die gebildeten Falten senkrecht zur Gleitschiene stehen. Eine derartige Anordnung führt zu einem erhöhten Luftwiderstand und einer erhöhten Geräuschbildung bei geöffnetem Dach.

Mittels einer anderen bekannten (DE-C-916 497) Faltdachausbildung wird erreicht, daß sich beim Zurückschieben des Faltdachs die Verdeckfalten von hinten beginnend nach rückwärts über den Umriß der festen Dachfläche legen. Das Verdeck bleibt auf diese Weise auch im teilweise geöffneten Zustand im vorderen Teil flach, und es ist sicher geführt, so daß der Entstehung von Windgeräuschen entgegengewirkt wird. Gleichwohl läßt die Stabilität insbesondere bei geöffnetem Dach zu wünschen übrig. Eine exakte Steuerung der Faltenbildung ist nicht möglich.

Es ist ferner ein Faltdach bekannt (DE-A-38 10 888), bei dem das Verdeck im Bereich des hinteren Endes der Dachöffnung in vom Umriß der festen Dachfläche nach unten stehende Falten gelegt wird. Das Verdeck ist an einer wechselnden Folge von Falt- und Zwischenspriegeln angebracht, die beidseits über jeweils eine Gelenkkette aus gleich langen Kettengliedern untereinander verbunden sind. Dabei stehen die Gelenkverbindungen der Kettenglieder wechselweise mit den Falt- und den Zwischenspriegeln in Verbindung, wobei die Zwischenspriegel gleichachsig zu den betreffenden Gelenkverbindungen liegen, während die Faltspriegel gegenüber den zugeordneten Gelenkverbindungen nach oben versetzt sind. Die den Zwischenspriegeln zugeordneten Gelenkverbindungen sind im ganzen Dachverstellbereich in ersten Längsführungen verschiebbar geführt, welche parallel zu der festen Dachfläche verlaufen. Die den Faltspriegeln zugeordneten Gelenkverbindungen sind bei geschlossenem Faltdach in zweiten Längsführungen verschiebbar geführt, die unterhalb der ersten Längsführungen liegen. Der hintere Abschnitt der zweiten Längsführungen verbreitert sich in lotrechter Richtung auf einen Wert, der um den gegenseitigen Höhenabstand der ersten und zweiten Längsführungen größer als die Faltenhöhe ist. Beim Zurückschieben des Verdecks gleiten die den Faltspriegeln zugeordneten Gelenkverbindungen unter Ausbildung von im wesentlichen lotrecht nach unten stehenden Verdeckfalten in diesen verbreiterten Abschnitt der zweiten Längsführungen. Diese Lösung eignet sich nicht für Faltdächer, bei denen die Verdeckfalten über den Umriß der festen Dachfläche gelegt werden und bei denen dementsprechend die Faltspriegel über die feste Dachfläche ausgestellt werden müssen. Die notwendige Einbauhöhe ist sehr groß. Dadurch geht in erheblichem Umfang Kopffreiheit selbst dann verloren, wenn die Faltenhöhe relativ gering gehalten wird. Kleine Falten bedingen eine Erhöhung der Anzahl der Falt- und Zwischenspriegel sowie der zugehörigen Gelenkverbindungen. Dadurch steigt die Anzahl der erforderlichen Einzelteile. Die Gesamtanordnung wird relativ schwergängig.

Der im Anspruch 1 angegebenen Erfindung liegt die Aufgabe zugrunde, ein flachbauendes, die Kopffreiheit möglichst wenig beeinträchtigendes Faltdach zu schaffen, bei dem die Faltenbildung in genau vorgegebener, geregelter Weise abläuft und bei dem bei geöffnetem Dach eine Reduzierung des Luftwiderstands und der Windgeräusche erreicht wird.

Diese Aufgabe wird erfindungsgemäß durch die Merkmale des Patentanspruchs 1 gelöst.

Das Faltdach nach der Erfindung kommt auf jeder Dachseite mit einer einzigen Längsführung aus, die keiner Erweiterung nach unten bedarf. Die über den Umriß der festen Dachfläche nach oben ausgelegten Falten werden entsprechend einem durch die Steuerkulissen exakt vorbestimmten Ablauf beim Öffnen des Daches gebildet und beim Schließen des Daches wieder beseitigt. Die Faltenform kann daher den jeweiligen ästhetischen und aerodynamischen Forderungen genau angepaßt werden. Unkontrollierten Verdeckbewegungen ist wirkungsvoll vorgebeugt. Das Faltdach erfordert in lotrechter Richtung nur einen geringen Einbauraum.

Um eine vorbestimmte Rückwärtsneigung der Falten bei geöffnetem Faltdach zu erreichen, sind die Kettenlängsglieder von der Verdeckvorderseite ausgehend abwechselnd länger und kürzer, wobei jede Falte des Verdecks durch Ausstellen jeweils eines Paares eines längeren und eines kürzeren Kettenlängsgliedes jeder der beiden Gelenkketten bestimmt wird.

Weitere Ausgestaltungen der Erfindung ergeben sich aus den Unteransprüchen.

Vorzugsweise ist das Gelenkbandsystem so ausgebildet, daß es jeder der beim Öffnen ausgebildeten Falten des Verdecks einen vorbestimmten Winkel mit Bezug auf die Längsführungen aufzwingt. Insbesondere kann dafür gesorgt sein, daß bei geöffnetem Dach sämtliche Falten den gleichen Winkel mit Bezug auf die Längsführungen bilden, wodurch ein sauberes Faltenpaket erhalten wird.

Die Spriegel sind zweckmäßig im Bereich beider Enden über jeweils eine Gelenkkette untereinander verbunden, deren Kettenglieder aus Längsgliedern und aus jeweils zwei aufeinanderfolgende Kettenlängsglieder untereinander gelenkig verbindenden, die Spriegel tragenden Zwischengliedern bestehen. Dabei sind vorteilhaft die den Zwischenspriegeln zugeordneten Ketten-Zwischenglieder mit Führungsteilen verbunden, die in den Längsführungen verschiebbar und gegen einen Austritt aus den Längsführungen gesichert sind, wobei insbesondere Kettenglieder in den Kettenbereichen, in denen die Faltspriegel abgestützt sind, Riegelorgane tragen, die beim Öffnen des Verdecks aus den Längsführungen austreten und beim Schließen des Verdecks in die Längsführungen eintauchen. Für eine besonders sichere Verriegelung sind vorteilhaft die Riegelorgane an den Kettenlängsgliedern nahe den die Faltspriegel tragenden Zwischengliedern angeordnet.

In weiterer Ausgestaltung der Erfindung sind die dem Steuern der Ausstell- und Einklappbewegungen der Kettenglieder jeder Gelenkkette dienenden Steuerkulissen mit Nockenbahnen versehen, welche mit Nockenelementen der Kettenlängsglieder, zweckmäßig Nockenelementen an jeweils den längeren Kettenlängsgliedern, zusammenwirken. Dabei kann vorteilhaft jede der beiden Steuerkulissen mehrere Nockenbahnen aufweisen, die im Zuge der Ausstell- und Einklappbewegungen der Kettenglieder in Abhängigkeit von dem jeweiligen Ausstellwinkel nacheinander mit unterschiedlichen Nockenelementen der Kettenlängsglieder in Eingriff kommen. Dies hat den Vorteil, daß die Steuerkulissen, bezogen auf den erzielbaren Ausstellbereich, besonders flach gehalten werden können. Zweckmäßig überlappen die Eingriffsdauern der verschiedenen Nockenelemente mit den jeweils zugeordneten Nockenbahnen einander, was zu einem gleichförmigen Arbeitsablauf beiträgt.

Vorzugsweise ist die Ausbildung so getroffen, daß in der Schließstellung des Verdecks nicht nur die Zwischenspriegel, sondern auch sämtliche Faltspriegel von den Längsführungen gehalten sind. Dadurch wird einem Anheben des Verdecks bei rascher Fahrt unter dem Einfluß des an der Dachoberseite ausgebildeten Unterdrucks vorgebeugt. Es ist ferner für einen besonders wirkungsvollen Intrusionsschutz gesorgt.

In weiterer Ausgestaltung der Erfindung kann eine Höhenverstellvorrichtung zum Absenken mindestens des vorderen Endes eines vorderen Endspriegels beim Einlaufen in die Schließstellung und zum Anheben dieses vorderen Spriegelendes beim Verlassen der Schließstellung vorgesehen sein. Dadurch läßt sich das Verdeck beim Schließen wirkungsvoll spannen. Das Faltdach wird gerade in dem kritischen Bereich der Verdeckvorderkante sicher abgedichtet.

Das Faltdach kann zweckmäßig als vormontierte Einbaueinheit ausgebildet sein. Eine solche Einbaueinheit erlaubt eine Funktionsprüfung bereits vor dem Einbau in das Fahrzeug. Die Montage am Fertigungsband des Fahrzeugherstellers gestaltet sich besonders einfach.

Die Spriegel können mit dem Gelenkbandsystem zweckmäßig über Clipsverbindungen verbunden sein. Dies erlaubt ein Testen der Funktionsmechanik des Faltdachs noch vor der Montage des Verdecks. Sollte das Verdeck später beschädigt werden, läßt es sich leicht auswechseln.

Ein Ausführungsbeispiel der Erfindung ist nachstehend anhand der Zeichnungen näher erläutert. Es zeigt:
- Fig. 1: eine perspektivische auseinandergezogene Ansicht des Faltdachs nach der Erfindung ohne Spriegel und ohne Verdeck,
- Fig. 2: in perspektivischer auseinandergezogener Darstellung die Spriegel, das Verdeck und den Himmel des Faltdachs nach Fig. 1,
- Fig. 3: eine Seitenansicht der einen Gelenkkette und der zugeordneten Längsführung für die Schließstellung des Faltdachs,
- Fign. 4 und 5: die Gelenkkette und die Längsführung gemäß Fig. 3 für Zwischenstellungen des Faltdachs,
- Fig. 6: die Gelenkkette und die Längsführung gemäß den Fign. 3 bis 5 in der Offenstellung des Faltdachs,
- Fig. 7: eine Seitenansicht der Gelenkkette gemäß Fig. 3, von der anderen Gelenkkettenseite aus gesehen,
- Fig. 8: eine Draufsicht auf die Gelenkkette gemäß den Fign. 3 und 7,
- Fig. 9: in größerem Maßstab eine Seitenansicht eines der kürzeren Kettenlängsglieder,
- Fig. 10: eine Draufsicht auf das Kettenlängsglied gemäß Fig. 9,
- Fig. 11: eine Draufsicht auf eines der längeren Kettenlängsglieder,
- Fig. 12: eine Seitenansicht des Kettenlängsglieds gemäß Fig. 11,
- Fig. 13: eine Seitenansicht der einen Steuerkulisse,
- Fig. 14: eine Draufsicht auf die Steuerkulisse,
- Fig. 15: eine Seitenansicht des vorderen Endes der Längsführung und des vorderen Endspriegels,
- Fig. 16: einen Teilquerschnitt des Faltdachs im Bereich des Hochstellnockens eines längeren Kettenlängsgliedes,
- Fig. 17: einen Teilquerschnitt des Faltdachs im Bereich eines der Zwischenglieder der Gelenkkette,
- Fign. 18 bis 22: das Zusammenwirken zwischen der Steuerkulisse und einem der längeren Kettenlängsglieder in verschiedenen Arbeitsstellungen, und
- Fig. 23: einen Längsschnitt durch den vorderen Teil des Faltdachs gemäß Fig. 1.

Das veranschaulichte Faltdach ist als Einbaueinheit ausgebildet, die einen vorzugsweise aus Kunststoff gefertigten Rahmen 10 aufweist, der auf eine schematisch bei 11 angedeutete und mit einer Dachöffnung 12 versehene feste Dachfläche (Dachhaut 11) aufgesetzt wird. Entlang beider Seiten des Rahmens 10 erstrecken sich Längsführungen, die im veranschaulichten Ausführungsbeispiel jeweils von einem vorderen Kopfstück 14, einer Führungsschiene 15 und einer Steuerkulisse 16 gebildet werden, welche in Fahrzeuglängsrichtung aneinander anschließen. Das Faltdach ist spiegelsymmetrisch zu einer Längssymmetrieachse ausgebildet. Die Erläuterungen der Funktionsteile auf der einen Dachseite gelten daher sinngemäß auch für die andere Dachseite.

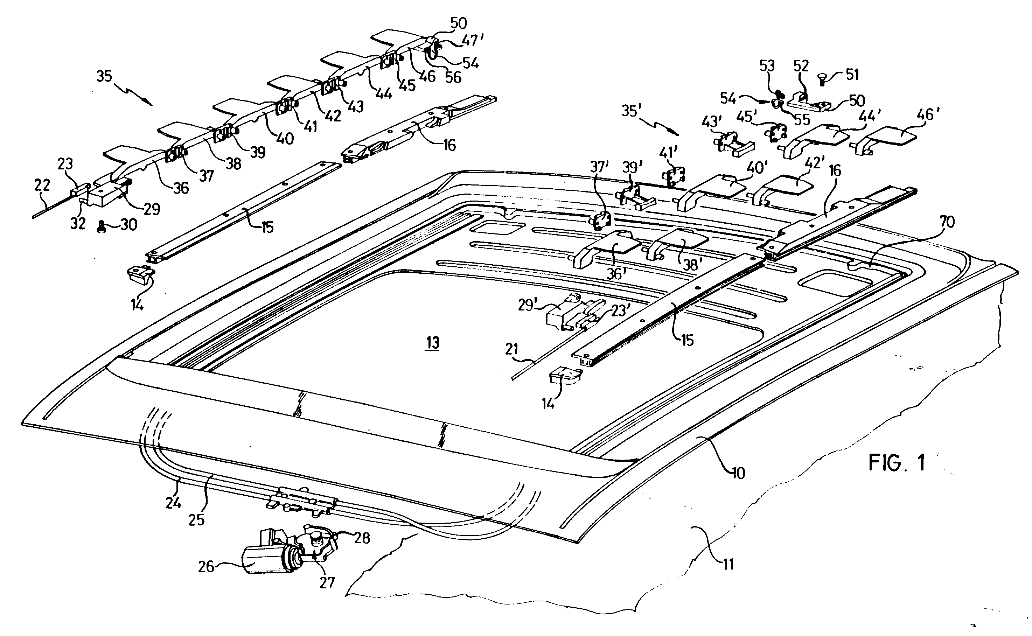

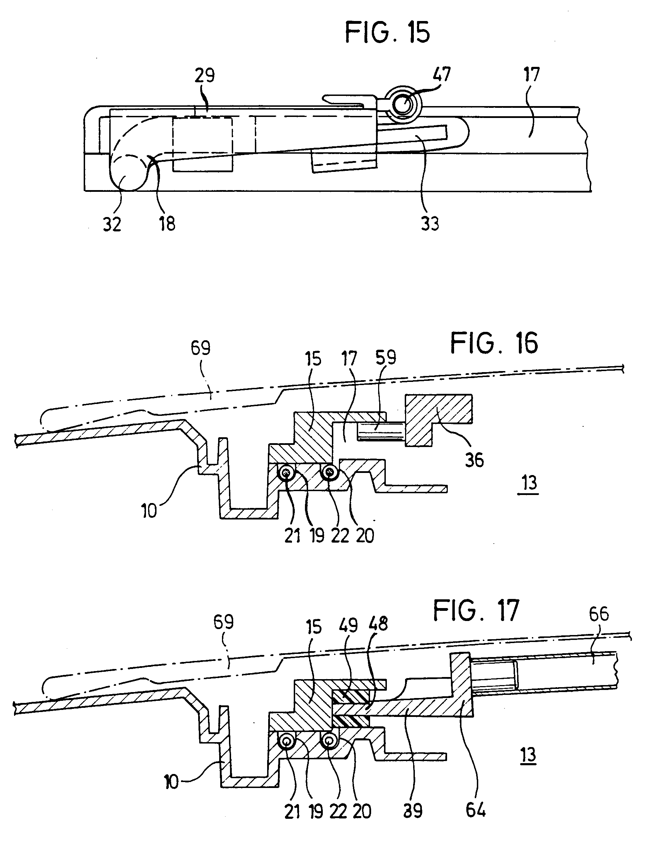

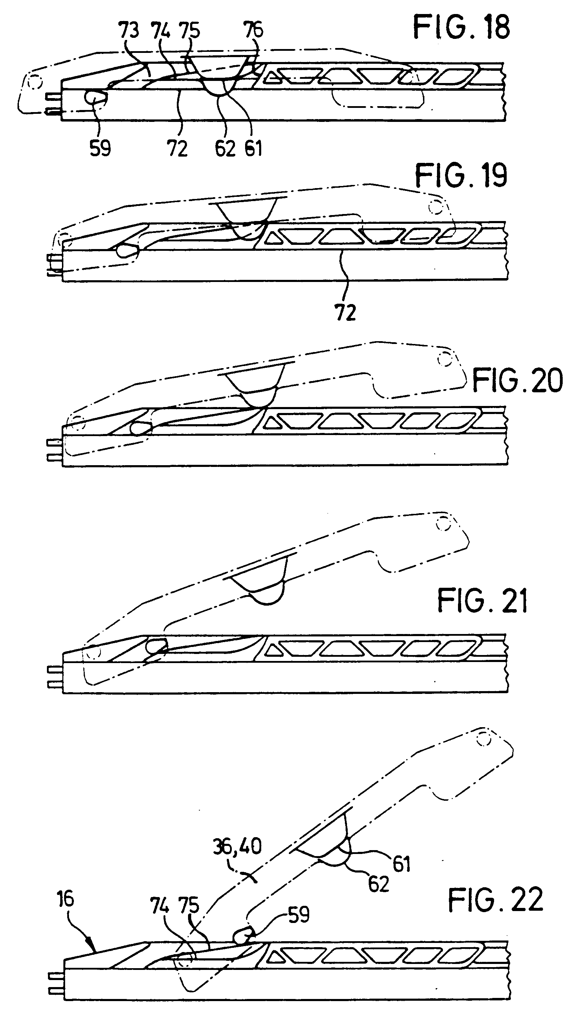

Die Längsführungsteile 14, 15 und 16 bestimmen die außenliegende Seitenfläche und die obere Begrenzung einer Längsführungsbahn 17, deren vorderes, in dem Kopfstück 14 ausgebildetes Ende 18 nach unten abgewinkelt ist (Fig. 15) und die sich im übrigen mindestens näherungsweise parallel zu der festen Dachfläche 11 erstreckt. Die untere Begrenzung der Längsführungsbahn 17 wird von der Oberseite des Rahmens 10 gebildet (Fign. 16 und 17). Im Bereich der Längsführungsbahn 17 sind in dem Rahmen 10 zwei parallele Kabelkanäle 19 und 20 ausgebildet, von denen der außenliegende Kanal 19 das auslaufseitige Ende eines ersten Antriebskabels 21 und der innenliegende Kanal 20 das antriebsseitige Ende eines zweiten Antriebskabels 22 aufnimmt. Das antriebsseitige Ende des Antriebskabels 22 ist mit einem Mitnehmerblock 23 (Fig. 1) fest verbunden, der in der Längsführungsbahn 17 verschiebbar geführt ist. Die Antriebskabel 21, 22 verlaufen im vorderen Bereich des Rahmens 10 in Führungsrohren 24 und 25. Sie werden gemeinsam von einem Antriebsmotor 26 über ein Untersetzungsgetriebe 27 und ein Antriebsritzel 28 angetrieben. Es versteht sich, daß stattdessen auch ein Antrieb mit einer Handkurbel vorgesehen sein kann.

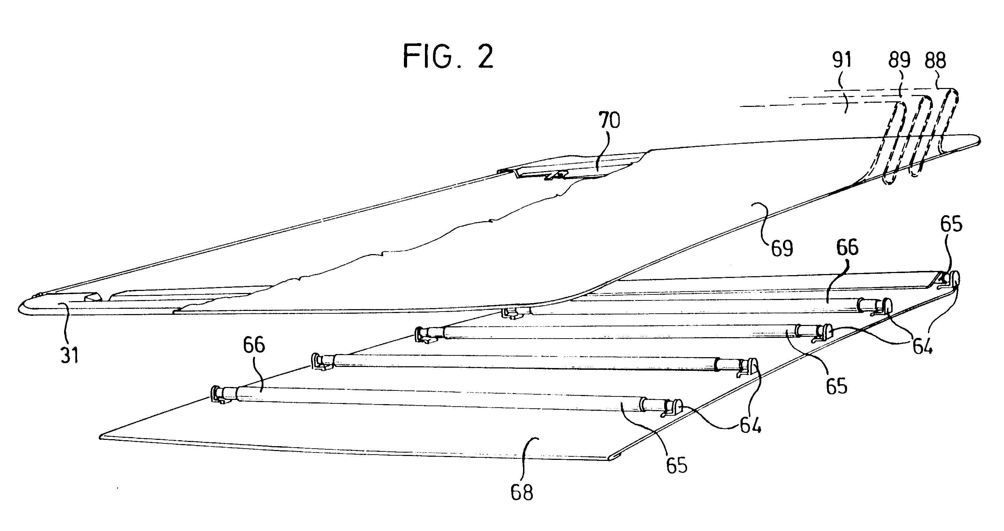

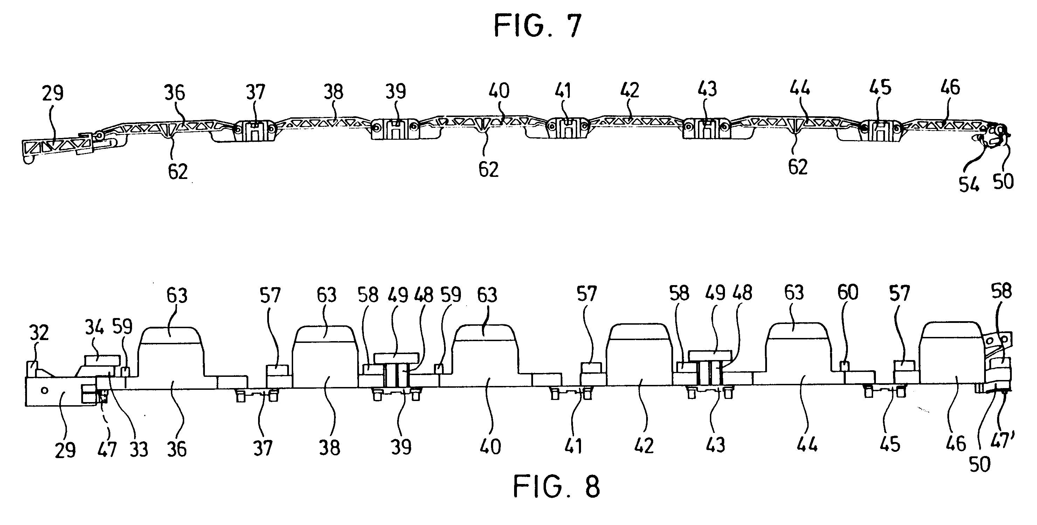

Der Mitnehmerblock 23 ist mit einem Schlitten 29 gekoppelt, während ein komplementärer Schlitten 29' auf der anderen Dachseite über einen Mitnehmerblock 23' mit dem antriebsseitigen Ende des anderen Antriebskabels 21 in Antriebsverbindung steht. Auf den beiden Schlitten 29, 29' ist, beispielsweise über Schrauben 30, ein vorderer Endspriegel 31 (Fig. 2) befestigt. Von dem Schlitten 29 stehen ein Führungszapfen 32 und ein Gleitschuhträger 33 seitlich nach außen ab (Fig. 8). Auf den Schleitschuhträger 33 ist ein Gleitschuh 34 aufgesteckt. Sowohl der Führungszapfen 32 als auch der Gleitschuh 34 sind in der Längsführungsbahn 17 verschiebbar geführt.

Der Schlitten 29 bildet das vorderste Glied einer sich in Fahrzeuglängsrichtung erstreckenden, insgesamt mit 35 bezeichneten Gelenkkette. Eine entsprechende Gelenkkette 35' ist spiegelsymmetrisch der anderen Dachseite zugeordnet. Die Gelenkkette 35 weist, an den Schlitten 29 nach hinten anschließend, der Reihe nach ein längeres Kettenlängsglied 36, ein Zwischenglied 37, ein kürzeres Kettenlängsglied 38, ein Zwischenglied 39, ein längeres Kettenlängsglied 40, ein Zwischenglied 41, ein kürzeres Kettenlängsglied 42, ein Zwischenglied 43, ein längeres Kettenlängsglied 44, ein Zwischenglied 45 sowie ein kürzeres Kettenlängsglied 46 auf. Die Gelenkkette 35' wird von entsprechenden spiegelsymmetrisch angeordneten Gliedern 36' bis 46' gebildet. Sämtliche Kettenglieder 29 und 36 bis 46 sind über Gelenkstifte 47 untereinander gelenkig verbunden, die von den Kettenlängsgliedern 36, 38, 40, 42, 44 und 46 seitlich nach innen abstehen. An den Zwischengliedern 39 und 43 sind nach außen abgewinkelte Gleitschuhträger 48 angeformt, auf die in der Längsführungsbahn 17 verschiebbar geführte Gleitschuhe 49 aufgesteckt sind. Das bei geschlossenem Dach hinten liegende Ende des Kettenlängsgliedes 46 ist an einen Lagerbock 50 angelenkt, der hinter der Steuerkulisse 16 sitzt und mit dem Rahmen 10 fest verbunden, beispielsweise mittels Schrauben 51 verschraubt, ist. Dabei greift ein am hinteren Ende des Kettenlängsgliedes 46 sitzender Gelenkstift 47' in ein im wesentlichen parallel zur Längsführungsbahn 17 gerichtetes Langloch 52 des Lagerbocks 50 ein. Ein Ende 53 einer Vorspannfeder 54 greift an einem aus dem Langloch 52 vorstehenden Ende des Gelenkstifts 47' an. Das andere Ende 55 der Vorspannfeder 54 ist in einer Öffnung 56 des Lagerbocks 50 abgestützt. Die Vorspannfeder 54 sucht den Gelenkstift 47' mit dem hinteren Ende des Langlochs 52 in Eingriff zu halten.

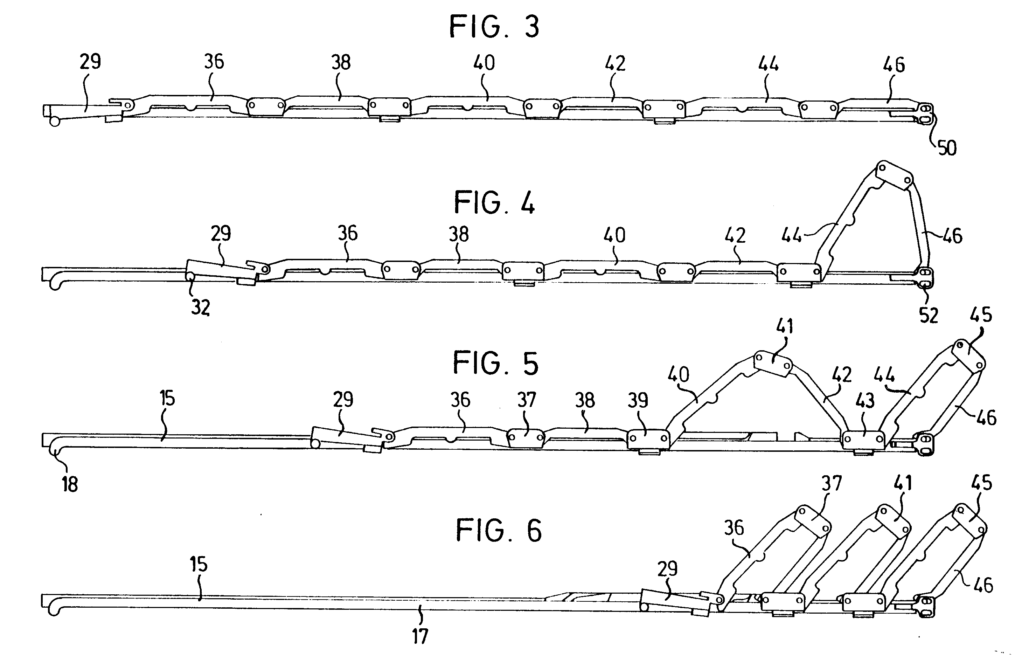

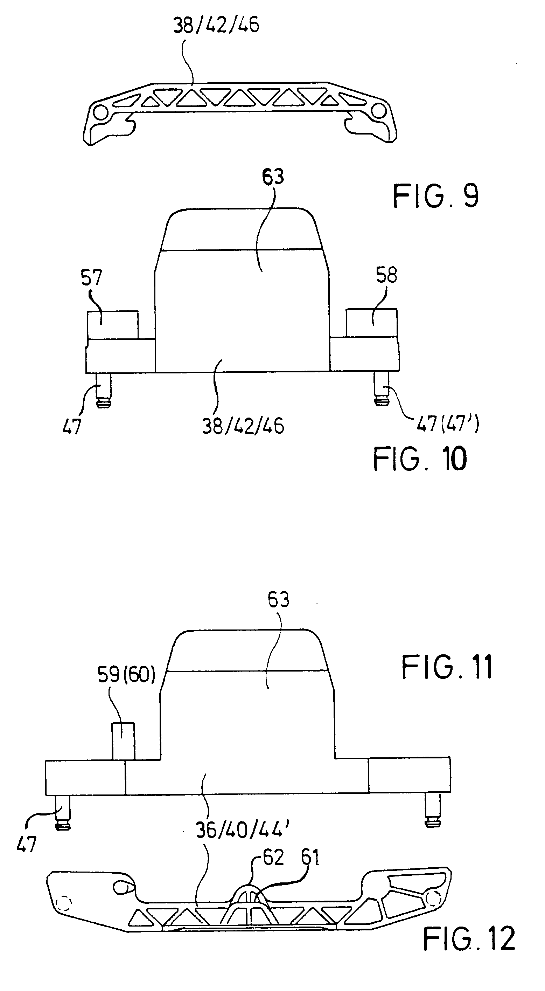

Die kürzeren Ketterlängsglieder 38, 42 und 46 (Fign. 9 und 10) sind untereinander baugleich. Sie weisen vorne und hinten jeweils einen seitlich nach außen abstehenden Gleitbacken 57 bzw. 58 auf. Die untereinander baugleichen längeren Ketterlängsglieder 36 und 40 (Fign. 11 und 12) tragen jeweils nahe ihrem vorderen Ende einen seitlich nach außen abstehenden Hochstellnocken 59. An dem hintersten längeren Kettenlängsglied 44 sitzt nahe dessen hinterem Ende ein Verriegelungsnocken 60. Im mittleren Bereich jedes der längeren Kettenlängsglieder 36, 40 und 44 sind ferner, in Querrichtung nebeneinanderliegend, ein Anhebenocken 61 und ein Ausstellnocken 62 vorgesehen. Die Kettenlängsglieder 36, 38, 40, 42, 44 und 46 weisen ferner jeweils eine seitlich nach außen abstehende Verdeckträgerplatte 63 auf. Die Kettenglieder 29 und 36 bis 46 sind mit nicht veranschaulichten Anschlägen ausgestattet, die dafür sorgen, daß ausgehend von der in Fig. 3 dargestellten gestreckten Lage, welche die Gelenkkette 35 in der Schließstellung des Faltdachs einnimmt, die längeren Kettenlängsglieder 36, 40 und 44 sowie die untereinander baugleichen Zwischenglieder 39 und 43 gegenüber dem jeweils vorhergehenden Kettenglied in Fig. 3 nur entgegen dem Uhrzeigersinn verschwenkt werden können, während die Kettenglieder 37, 38, 41, 42, 45 und 46 gegenüber dem jeweils vorangehenden Kettenglied in Fig. 3 nur im Uhrzeigersinn verschwenkbar sind.

In jedes der Zwischenglieder 37, 37', 39, 39', 41, 41', 43, 43', 45 und 45' ist von unten ein Spriegelträger 64 eingeclipst (Fig. 2). Dabei halten die den Zwischengliedern 37, 41 und 45 zugeordneten Spriegelträger 64 jeweils einen quer zur Fahrzeuglängsrichtung verlaufenden Faltspriegel 65, während an den den Zwischengliedern 39 und 43 zugeordneten Spriegelträgern 64 jeweils ein Zwischenspriegel 66 abgestützt ist. Ein flexibler Himmel 68 reicht von dem vorderen Endspriegel 31 bis zu dem hintersten Faltspriegel 65. Ein faltbares Verdeck 69 erstreckt sich von dem vorderen Endspriegel 31 bis zu einem festen hinteren Schenkel 70 des Rahmens 10. Dabei greifen die Verdeckträgerplatten 63 in entsprechende Taschen an den Seitenrändern des Verdecks 69 ein.

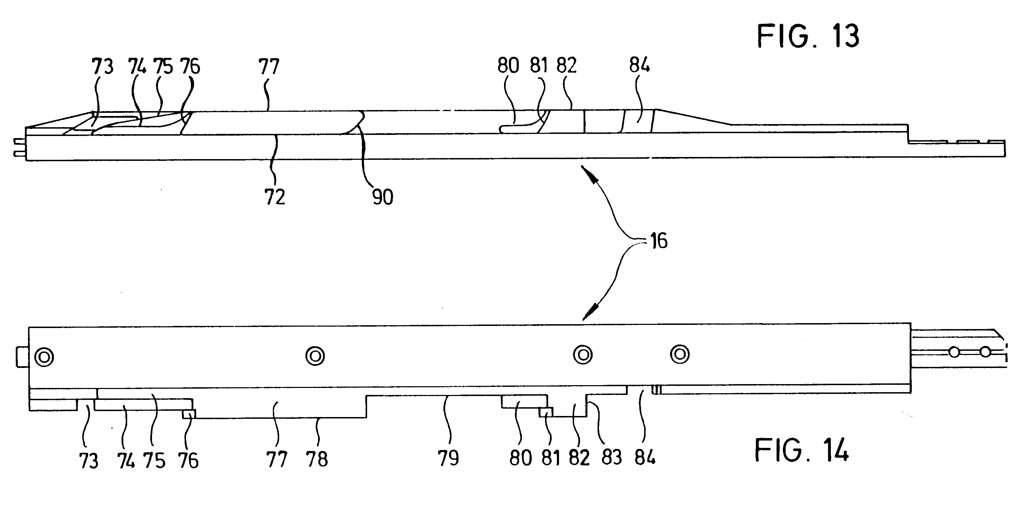

Die im einzelnen in den Fign. 13 und 14 sowie 18 bis 22 veranschaulichte Steuerkulisse 16 bildet mit einer Fläche 72 eine obere Begrenzung der Längsführungsbahn 17. Nahe dem vorderen Ende der Steuerkulisse 16 ist ein schräg nach vorne und unten geneigter Kulissenschlitz 73 ausgebildet, dessen untere Begrenzung von den vorneliegenden Enden einer Anhebenockenbahn 74 und einer Hochstellnockenbahn 75 gebildet wird, die in Querrichtung nebeneinander liegen. Eine relativ kurze und steile Ausstellnockenbahn 76 sitzt im Bereich des hinteren Endes der Nockenbahnen 74 und 75 seitlich neben der Nockenbahn 74. Die Nockenbahnen 74, 75 und 76 steigen jeweils bis auf das Niveau der Oberseite 77 der Steuerkulisse 16 an. Auf einen nach innen vorspringenden Abschnitt 78 der Steuerkulisse 16 folgt eine seitliche Ausnehmung 79, die nach hinten von einer Anhebenockenbahn 80 und einer Ausstellnockenbahn 81 begrenzt wird. Die Nockenbahnen 80 und 81 entsprechen nach Formgebung und Aufgabe den Nockenbahnen 74 und 76. Die Nockenbahnen 80 und 81 bilden den vorderen Teil eines nach innen vorspringenden Abschnitts 82, dessen Rückseite in später noch näher erläuterter Weise als Anschlag 83 dient. Eine seitliche Ausnehmung 84 ist in einem hinter dem Anschlag 83 Anschlag 83 dient. Eine seitliche Ausnehmung 84 ist in einem hinter dem Anschlag 83 liegenden Bereich der Steuerkulisse 16 ausgebildet.

Die Funktionsweise des Faltdaches sei nachstehend ausgehend von der Schließstellung erläutert.

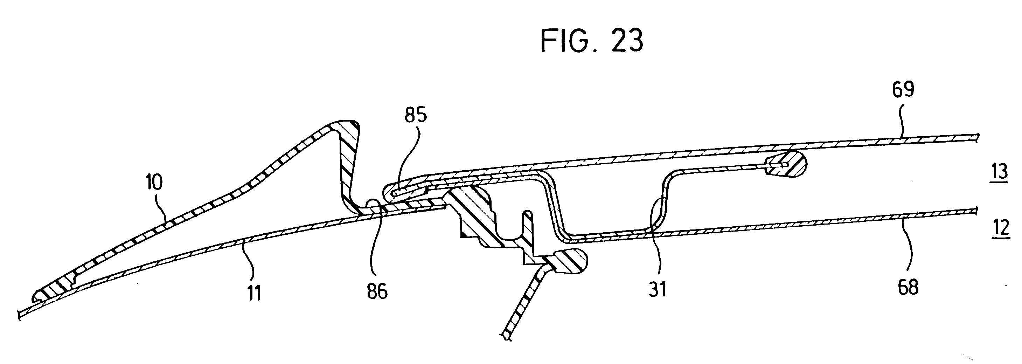

In der Schließstellung steht der Führungszapfen 32 in dem nach unten abgewinkelten vorderen Ende 18 der Längsführungsbahn 17. Infolgedessen ist der Gleitschuhträger 33 gegenüber dem parallel zur festen Dachhaut 11 verlaufenden Abschnitt der Längsführungsbahn 17 gekippt, wie dies aus Fig. 15 im einzelnen hervorgeht. Dadurch wird, wie in Fig. 23 gezeigt ist, der vordere Endspriegel 31 im Bereich seines vorderen Randes 85 in Richtung auf eine entsprechende Anlagefläche 86 des Rahmens 10 gepreßt. In die Längsführungsbahn 17 greifen nicht nur die mit dieser Führungsbahn in ständigem Eingriff gehaltenen Gleitschuhe 34 und 49, sondern auch die Hochstellnocken 59, der Verriegelungsnocken 60 und die Gleitbacken 57 und 58 der kürzeren Kettenlängsglieder 38 und 42 ein. Der Verriegelungsnocken 60 legt sich von unten gegen die Fläche 72 in dem Bereich der Steuerkulisse 16 an, der an die seitliche Ausnehmung 84 nach vorne anschließt. Der Gelenkstift 47' ist entgegen der Kraft der Vorspannfeder 54 nach vorne gezogen, und er liegt am vorderen Ende des Langlochs 52 an. Auf diese Weise sind sowohl die Zwischenspriegel 66 als auch alle drei Faltspriegel 65 gegen ein Ausheben nach oben gesichert. Die Anlage des Führungszapfens 32 an der hinteren Begrenzungswand des vorderen Längsführungsbahnendes 18 hält außerdem das Verdeck 69 sicher gespannt.

Werden über den Antriebsmotor 26 die Antriebskabel 21 und 22 so verstellt, daß sich die betreffenden Mitnehmerblöcke 23 und 23' nach hinten bewegen, wird zunächst über die Vorspannfeder 54 der Gelenkstift 47' in dem Langloch 52 nach hinten gezogen. Dies hat zur Folge, daß der Verriegelungsnocken 60 von der Fläche 72 der Längsführungsbahn 17 freikommt und in die seitliche Ausnehmung 84 eintritt. Gleichlaufend damit wandert zu Beginn der Öffnungsbewegung der Führungszapfen 32 in dem vorderen Ende 18 der Führungsbahn 17 nach oben, wodurch der Schlitten 29 und der vordere Endspriegel 31 entgegen dem Uhrzeigersinn verschwenkt werden. Auf diese Weise wird der Dichteingriff zwischen dem vorderen Endspriegel 31 und dem Rahmen 10 aufgehoben. Bei weiterem Verstellen der Mitnehmerblöcke 23, 23' nach hinten bewegt sich der Anhebenocken 61 des Kettenlängsgliedes 44 entlang der Anhebenockenbahn 80 nach oben; das Kettenlängsglied 44 wird nach oben gedrückt. Über das Zwischenglied 45 werden der hinterste Faltspriegel 65 und das Kettenlängsglied 46 nach oben mitgenommen. Die Ausbildung der ersten Verdeckfalte 88 beginnt im hinteren Verdeckbereich. Kurz bevor der Anhebenocken 61 das obere Ende der Anhebenockenbahn 80 erreicht hat, trifft der Ausstellnocken 62 des Kettenlängsgliedes 44 auf die Ausstellnockenbahn 81, um das hinterste längere Kettenlängsglied 44 weiter auszustellen. Alle anderen Spriegel sind gegen Anheben weiterhin in der Längsführungsbahn 17 verriegelt.

Die Ausbildung der zweiten Falte 89 beginnt erst, wenn im Zuge weiterer Verschiebung des Mitnehmerblockes 23 nach hinten der vordere Gleitbacken 57 des Kettenlängsgliedes 42 die vordere Begrenzung 90 der Ausnehmung 79 erreicht und dadurch aus der Längsführungsbahn 17 austreten kann, während zunächst der Anhebenocken 61 des Kettenlängsgliedes 40 auf die Anhebenockenbahn 74 (Fig. 18) und dann der Ausstellnocken 62 des Kettenlängsgliedes 40 auf die Ausstellnockenbahn 76 trifft (Fig. 19). Dadurch wird die Anhebe- und Ausstellbewegung des Kettenlängsgliedes 40 eingeleitet, wobei das Zwischenglied 41 und das Kettenlängsglied 42 entsprechend mit nach oben genommen werden. Kurz bevor der Ausstellnocken 62 am Ende der Ausstellnockenbahn 76 angelangt ist, trifft der Hochstellnocken 59 des Kettenlängsgliedes 40 auf die Hochstellnockenbahn 75, um die kulissen-zwangsgesteuerte Hochstellbewegung des Kettenlängsgliedes 40 und damit des mit dem Zwischenglied 41 verbundenen mittleren Faltspiegels 65 zu bewirken (Fign. 19 bis 22). Entsprechendes wiederholt sich bei der Bildung der dritten (vordersten) Falte.

Wie aus den Fign. 2 und 6 hervorgeht, nehmen alle drei Falten 88, 89 und 91 die gleiche vorbestimmte Winkelausrichtung mit Bezug auf die feste Dachfläche 11 ein. Dieser Winkel ist durch die Längenverhältnisse der Kettenglieder vorgegeben.

Soll umgekehrt das Faltdach von der voll geöffneten Stellung gemäß Fig. 6 in Richtung auf die Schließstellung verstellt werden, werden durch entsprechende Betätigung des Antriebsmotors 26 die Mitnehmerblöcke 23, 23' nach vorne verstellt. Der vordere Endspriegel 31 wandert nach vorne. Dabei erreichen die Kettenlängsglieder 36 und 38 schließlich eine Lage, in welcher der hintere Gleitbacken 58 des Kettenlängsgliedes 38 auf den Anschlag 83 trifft und eine weitere Vorbewegung des mit dem Zwischenglied 39 verbundenen vorderen Zwischenspriegels 66 verhindert, bis das Verdeck zwischen dem vorderen Zwischenspriegel und dem Endspriegel 31 glatt ausgestreckt ist. Im Zuge die ser Verstellbewegung läuft der Hochstellnocken 59 des Kettengliedes 36 entlang der Hochstellnockenbahn 75 nach unten, und er tritt dabei in den Kulissenschlitz 73 ein, während der vordere Gleitbacken 57 des Kettenlängsgliedes 38 im Bereich der vorderen Begrenzung 90 in die Ausnehmung 79 eintaucht. Durch fortgesetztes Verstellen legen sich der Hochstellnocken 59 und der Gleitbacken 57 der Kettenlängsglieder 36 bzw. 38 unter die obere Begrenzungsfläche 72 der Längsführungsbahn 17. Dadurch werden die Kettenlängsglieder 36 und 38 wieder in ihrer abgesenkten Stellung verriegelt. Die dritte Falte 91 ist jetzt verschwunden.

In einer analoger Weise wird die zweite Falte 89 beseitigt. Dabei schlägt der hintere Gleitbacken 58 des Kettenlängsgliedes 42 an dem Anschlag 83 an, bis das Verdeck in diesem Bereich glattgezogen ist und dieser Gleitbacken in die Längsführungsbahn 17 eintritt, wobei die Nocken 61, 62 und 59 des Kettenlängsgliedes 40 mit den Nockenbahnen 74, 67 und 75 zusammenwirken. Ist unter Beseitigung auch der ersten Falte 88 die Schließstellung des Verdecks nahezu erreicht, tritt der Verriegelungsnocken 60 in die seitliche Ausnehmung 84 ein. Eine Verriegelung auch des hintersten Faltspriegels 65 erfolgt, indem der Verriegelungsnocken 60 in die Längsführungsbahn 17 eintaucht und sich gegen deren obere Begrenzungsfläche 72 anlegt, während gleichzeitig der Gelenkstift 47' entgegen der Kraft der Vorspannfeder 54 nach vorne bis zum vorderen Ende des Länglochs 52 verstellt wird.

## Patentansprüche

1. Faltdach für Fahrzeuge zum wahlweisen Verschließen oder mindestens teilweisen Freigeben einer Dachöffnung (12) mit einem Verdeck (69), das mit einer Folge von Faltspriegeln (65) verbunden ist, die beidseits mit Längsführungen (17) zusammenwirken, welche bei geschlossenem Verdeck mindestens den größeren Teil der Faltspriegel zwangsführen, jedoch beim Öffnen des Verdecks die Faltspriegel zum Falten des Verdecks nacheinander für eine Ausstellbewegung freigeben, wobei die Faltspriegel über Gelenkketten (35, 35') untereinander verbunden sind, die drucksteife Kettenlängsglieder (36,36', 38,38', 40,40', 42,42', 44,44', 46,46') aufweisen, und beim Öffnen und Verschließen des Verdecks mit Steuerflächen zusammenwirken, welche den Kettenlängsgliedern zwangsgesteuerte Ausstell- bzw. Einklappbewegungen aufzwingen, indem sie auf jeweils ein jeder Falte (88, 89, 91) zugeordnetes Kettenlängsglied (36,36', 40,40', 44,44') eine quer zur Längsbewegung gerichtete Kraftkomponente aufbringen, während das betreffende Kettenlängsglied an den von dem zugehörigen Faltspriegel abgewendeten Ende mit der Längsführung in Eingriff gehalten ist, **dadurch gekennzeichnet,**
- daß das Verdeck (69) mit einer wechselnden Folge von Falt- und Zwischenspriegeln (65, 66) verbunden ist, die ihrerseits über das Gelenkbandsystem (35, 35') untereinander verbunden sind;
- daß bei geschlossenem Verdeck alle Zwischenspriegel (66) von den Längsführungen (17) zwangsgeführt sind und beim Öffnen des Verdecks die Zwischenspriegel mit den Längsführungen weiterhin in Eingriff gehalten sind;
- daß die Dachöffnung (12) in einer festen Dachfläche (11) ausgebildet ist, zu der sich die Längsführungen (17) mindestens näherungsweise parallel erstrecken;
- daß die Steuerflächen von Steuerkulissen (16) gebildet sind, die einen Teil der oberen Begrenzung der Längsführungen (17) darstellen und die quer zur Längsbewegung gerichtete Kraftkomponente auf das betreffende Kettenlängsglied (36,36', 40,40', 44,44') an einer zwischen den Längsenden dieses Ketterlängsgliedes liegenden Stelle aufbringen; und
- daß die Kettenlängsglieder von der Verdeckvorderseite ausgehend abwechselnd länger und kürzer sind, wobei jede Falte des Verdecks durch Ausstellen jeweils eines Paares eines längeren Kettenlängsgliedes (36,36', 40,40', 44,44') und eines kürzeren Kettenlängsgliedes (38,38', 42,42', 46,46') jeder der Gelenkketten (35,35') bestimmt wird.

2. Faltdach nach Anspruch 1, dadurch gekennzeichnet, daß das Gelenkbandsystem (Gelenkketten 35, 35') jeder der beim Öffnen ausgebildeten Falten (88, 89, 91) des Verdecks (69) einen vorbestimmten Winkel mit Bezug auf die Längsführungen (Längsführungsbahnen 17) aufzwingt.

3. Faltdach nach Anspruch 2, dadurch gekennzeichnet, daß das Gelenkbandsystem (Gelenkketten 35, 35') sämtlichen Falten (88, 89, 91) den gleichen Winkel mit Bezug auf die Längsführungen (Längsführungsbahnen 17) aufzwingt.

4. Faltdach nach einem der vorhergehenden Ansprüche, dadurch gekennzeichnet, daß die Spriegel (Faltspriegel 65, Zwischenspriegel 66) im Bereich beider Enden über jeweils eine Gelenkkette (35, 35') untereinander verbunden sind, deren Kettenglieder aus Kettenlänsgliedern (36, 36', 38, 38', 40, 40', 42, 42', 44, 44', 46, 46') und aus jeweils zwei aufeinanderfolgende Kettenlängsglieder untereinander gelenkig verbindenden, die Spriegel tragenden Zwischengliedern (37, 37', 39, 39', 41, 41', 43, 43', 45, 45') bestehen.

5. Faltdach nach Anspruch 4, dadurch gekennzeichnet, daß die den Zwischenspriegeln (66) zugeordneten Ketten-Zwischenglieder (39, 39', 43, 43') mit Führungsteilen (Gleitschuhträger 48, Gleitschuhe 49) verbunden sind, die in den Längsführungen (Längsführungsbahnen 17) verschiebbar und gegen einen Austritt aus den Längsführungen gesichert sind.

6. Faltdach nach Anspruch 4 oder 5, dadurch gekennzeichnet, daß Kettenglieder (Kettenlängsglieder 38, 38', 42, 42', 44, 44') in den Kettenbereichen, in denen die Faltspriegel (65) abgestützt sind, Riegelorgane (Verriegelungsnocken 60, Gleitbacken 57) tragen, die beim Öffnen des Verdecks (69) aus den Längsführungen (Längsführungsbahnen 17) austreten und beim Schließen des Verdecks in die Längsführungen eintauchen.

7. Faltdach nach Anspruch 6, dadurch gekennzeichnet, daß die Riegelorgane (Verriegelungsnocken 60, Gleitbacken 57) an den Kettenlängsgliedern (38, 38', 42, 42', 44, 44') nahe den die Faltspriegel (65) tragenden Zwischengliedern (37, 37', 41, 41', 45, 45') angeordnet sind.

8. Faltdach nach einem der vorhergehenden Ansprüche, dadurch gekennzeichnet, daß die dem Steuern der Ausstell- und Einklappbewegungen der Kettenglieder (Kettenlängsglieder 36, 36', 38, 38', 40, 40', 42, 42', 44, 44', 46, 46', Zwischenglieder 37, 37', 39, 39', 41, 41', 43, 43', 45, 45') jeder Gelenkkette (35, 35') dienenden Steuerkulissen (16) mit Nockenbahnen (Anhebenockenbahnen 74, 80, Hochstellnockenbahn 75, Ausstellnockenbahnen 76, 81) versehen sind, welche mit Nockenelementen (Anhebenocken 61, Hochstellnocken 59, Ausstellnocken 62) der Kettenlängsglieder (36, 36', 38, 38', 40, 40', 42, 42', 44, 44', 46, 46') zusammenwirken, die in Längsabstand von den Enden der Kettenlängsglieder liegen.

9. Faltdach nach Anspruch 8, dadurch gekennzeichnet, daß die Nockenelemente (Anhebenocken 61, Hochstellnocken 59, Ausstellnocken 62) jeweils an den längeren Kettenlängsgliedern (36, 36', 40, 40', 44, 44') angeordnet sind.

10. Faltdach nach Anspruch 8 oder 9, dadurch gekennzeichnet, daß jede der beiden Steuerkulissen (16) mehrere Nockenbahnen (Anhebenockenbahnen 74, 80, Hochstellnockenbahn 75, Ausstellnockenbahnen 76, 81) aufweist, die im Zuge der Ausstell- und Einklappbewegungen der Kettenglieder (Kettenlängsglieder 36, 36', 38, 38', 40, 40', 42, 42', 44, 44', 46, 46', Zwischenglieder 37, 37', 39, 39', 41, 41', 43, 43', 45, 45') in Abhängigkeit von dem jeweiligen Ausstellwinkel nacheinander mit unterschiedlichen Nockenelementen (Anhebenocken 61, Hochstellnocken 59, Ausstellnocken 62) der Kettenlängsglieder (36, 36', 40, 40', 44, 44') in ein Eingriff kommen.

11. Faltdach nach Anspruch 10, dadurch gekennzeichnet, daß die Eingriffsdauern der verschiedenen Nockenelemente (Anhebenocken 61, Hochstellnocken 59, Ausstellnocken 62) mit den jeweils zugeordneten Nockenbahnen (Anhebenockenbahnen 74, 80, Hochstellnockenbahn 75, Ausstellnockenbahnen 76, 81) einander überlappen.

12. Faltdach nach einem der vorhergehenden Ansprüche, dadurch gekennzeichnet, daß in der Schließstellung des Verdecks (69) auch sämtliche Faltspriegel (65) von den Längsführungen (Längsführungsbahnen 17) gehalten sind.

13. Faltdach nach einem der vorhergehenden Ansprüche, gekennzeichnet durch eine Höhenverstellvorrichtung (vordere Enden 18 der Längsführungsbahnen 17. Führungszapfen 32) zum Absenken mindestens des vorderen Endes eines vorderen Endspriegels (31) beim Einlaufen in die Schließstellung zum Anheben dieses vorderen Spriegelendes beim Verlassen der Schließstellung.

14. Faltdach nach einem der vorhergehenden Ansprüche, dadurch gekennzeichnet, daß es als vormontierte Einbaueinheit ausgebildet ist.

15. Faltdach nach einem der vorhergehenden Ansprüche, dadurch gekennzeichnet, daß die Spriegel (Faltspriegel 65, Zwischenspriegel 66) mit dem Gelenkbandsystem (Gelenkketten 35, 35') über Clipsverbindungen (Zwischenglieder 37, 37', 39, 39', 41, 41', 43, 43', 45, 45', Spriegelträger 64) verbunden sind.

16. Faltdach nach einem der vorhergehenden Ansprüche gekennzeichnet durch eine Rückhalteeinrichtung (Gleitbacken 58, Anschlag 83), die beim Schließen des Daches das Auflösen einer Falte (89, 88) verhindert, bis das Verdeck (69) im Bereich der jeweils davor liegenden Falte (91 bezw. 89) glattgezogen ist.

17. Faltdach nach Anspruch 16, dadurch gekennzeichnet, daß die Rückhalteeinrichtung von miteinander zusammenwirkenden Rückhalteelementen (Gleitbacken 58, Anschlag 83) der Kettenglieder und der Steuerkulisse (16) gebildet wird.

## Claims

1. A foldable roof for vehicles, for optionally closing or at least partially opening a roof opening (12), with a covering (69) which is connected to a sequence of fold supports (65) which cooperate on both sides with longitudinal guides (17) which, when the cover is closed, positively guide at least the greater part of the fold supports but, upon opening of the cover, release the fold supports for folding the cover one after another for a push-out movement, whereby the fold supports are connected to one another via link chains (35,35') which comprise compression-resistant long chain links (36,36', 38,38', 40,40', 42,42', 44,44', 46,46') and, upon opening and closing of the cover, cooperate with control surfaces which impose upon the long chain links positively controlled push-out and/or fold-in movements in that they apply a force component directed crosswise to the longitudinal movement to in each case a long chain link (36,36', 40,40', 44,44') associated with each fold (88, 89, 91), while the relevant long chain link is held in engagement with the longitudinal guide at the end which is remote from the associated fold support, characterised in that
- the cover (69) is connected to a changing sequence of fold and intermediate supports (65, 66) which are in turn connected to one another via the link belt system (35,35');
- that when the cover is closed all the intermediate supports (66) are positively guided by the longitudinal guides (17) and upon opening of the cover the intermediate supports are further held in engagement with the longitudinal guides;
- that the roof opening (12) is constructed in a fixed roof area (11) with which the longitudinal guides (17) extend at least approximately parallel;
- that the control surfaces are formed by control links (16) which represent a part of the upper boundary of the longitudinal guides (17) and which apply to the relevant long chain link (36,36', 40,40', 44,44') the force component which is directed crosswise to the longitudinal movement, at a location situated between the long ends of this long chain link; and
- that the long chain links, starting from the leading edge of the cover, are alternately longer and shorter, each fold in the cover being determined by either pushing out of in each case one pair of one longer long chain link (36,36', 40,40', 44,44') and a shorter long chain link (38,38', 42,42', 46,46') of each of the link chains (35,35').

2. A foldable roof according to Claim 1, characterised in that the link chain system (link chains 35,35') imposes on each of the folds (88, 89, 91) of the cover (69) which are formed during opening a predetermined angle in respect of the longitudinal guides (longitudinal guide paths 17).

3. A foldable roof according to Claim 2, characterised in that the link chain system (link chains 33,33') imposes on all folds (88, 89, 91) the same angle in respect of the longitudinal guides (longitudinal guide paths 17).

4. A foldable roof according to one of the preceding claims, characterised in that the supports (fold supports 65, intermediate supports 66) are connected to one another in the region of both ends by in each case one link chain (35,35'), the chain links of which consist of long chain links (36,36', 38,38', 40,40', 42,42', 44,44', 46,46') and of in each case two intermediate links (37,37', 39,39', 41,41', 43,43', 45,45') which carry the supports and articulatingly connect two successive long chain links.

5. A foldable roof according to Claim 4, characterised in that the intermediate chain links (39,39', 43,43') associated with the intermediate supports (66) are connected to guide parts (sliding shoe carrier 48, sliding shoe 49) which are displaceable in the longitudinal guides (longitudinal guide paths 17) and are secured against emerging from the longitudinal guides.

6. A foldable roof according to Claim 4 or 5, characterised in that chain links (long chain links 38,38', 42,42', 44,44') in the chain areas in which the fold supports (65) are supported, have locking members (locking dogs 60, sliding blocks 57) which, upon opening of the cover (69), emerge from the longitudinal guides (longitudinal guide paths 17) and enter them again when the cover is closed.

7. A foldable roof according to Claim 6, characterised in that the locking members (locking dogs 60, sliding blocks 57) are disposed on the long chain links (38,38', 42,42', 44,44') close to the intermediate links (37,37', 41,41', 45,45') which carry the fold supports (65).

8. A foldable roof according to one of the preceding claims, characterised in that the control links (16) which serve to control the push-out and fold-in movements of the chain links (long chain links 36,36', 38,38', 40,40', 42,42', 44,44', 46,46', intermediate links 37,37', 39,39', 41,41', 43,43', 45,45') of each link chain (35,35') are provided with cam paths (lifting cam paths 74, 80, erecting cam path 75, push-out cam paths 76, 81) which cooperate with cam elements (lifting cams 61, erecting cams 59, push-out cams 62) of the long chain links (36,36', 38,38', 40,40', 42,42', 44,44', 46,46') which are situated at a longitudinal distance from the ends of the long chain links.

9. A foldable roof according to Claim 8, characterised in that the cam elements (lifting cams 61, erecting cams 59, push-out cams 62) are in each case disposed on the longer long chain links (36,36', 40,40', 44,44').

10. A foldable roof according to Claim 8 or 9, characterised in that each of the two control links (16) comprises a plurality of cam paths (lifting cam paths 74, 80, erecting cam path 75, push-out cam paths 76, 81) which during the course of the push-out and fold-in movements of the chain links (long chain links (36,36', 38,38', 40,40', 42,42', 44,44', 46,46', intermediate links 37,37', 39,39', 41,41', 43,43', 45,45') one after another engage different cam elements (lifting cams 61, erecting cams 59, push-out cams 62 on the long chain links 36,36', 40,40', 44,44').

11. A foldable roof according to Claim 10, characterised in that the periods of the various cam elements (lifting cams 61, erecting cams 59, push-out cams 62) with the respectively associated cam paths (lifting cam paths 74, 80, erecting cam path 75, push-out cam paths 76, 81) overlap one another.

12. A foldable roof according to one of the preceding claims, characterised in that in the closed position of the cover (69), also all fold supports (65) are held by the longitudinal guides (longitudinal guide paths 17).

13. A foldable roof according to one of the preceding claims, characterised by a height-adjusting device (front ends 18 of the longitudinal guide paths 17, guide journals 32) for lowering at least the front end of a front end support (31) upon entering the closed position, for lifting this front support end upon leaving the closed position.

14. A foldable roof according to one of the preceding claims, characterised in that it is constructed as a pre-assembled fit-in unit.

15. A foldable roof according to one of the preceding claims, characterised in that the supports (fold supports 65, intermediate supports 66) are connected to the link chain system (link chains 35,35') by clip connections (intermediate links 37,37', 39,39', 41,41', 43,43', 45,45', support carriers 64).

16. A foldable roof according to one of the preceding claims, characterised in that a retaining means (sliding blocks 58, abutment 83) which upon closure of the roof, prevents the collapse of a fold (89, 88) until the cover (69) has been pulled flat in the region of whichever is the preceding fold (91, 89).

17. A foldable roof according to Claim 16, characterised in that the retaining means consists of retaining elements (sliding blocks 58, abutment 83) on the chain links and control links (16) which cooperate with one another.

## Revendications

1. Toit pliant pour véhicule, permettant de fermer sélectivement ou au moins de dégager partiellement une ouverture de toit (12) muni d'une capote (69) reliée à une succession d'arceaux de pliage (65) coopérant de chaque côté avec des rails longitudinaux (17), et qui, lorsque la couverture est fermée, guident de manière forcée au moins la plus grande partie des arceaux de pliage mais qui à l'ouverture de la capote libèrent les arceaux de pliage pour plier la capote, successivement, pour un mouvement de déploiement, les arceaux de pliage étant reliés entre eux par des chaînes articulées (35, 35'), les maillons longitudinaux de la chaîne, rigides à la compression (36, 36', 38, 38', 40, 40', 42, 42', 44, 44', 46, 46'), à l'ouverture et à la fermeture de la capote coopèrent avec des surfaces de commande qui imposent aux maillons longitudinaux des chaînes, des mouvements de déploiement et de repliage forcés, en ce qu'ils s'appliquent à chaque maillon longitudinal de la chaîne (36, 36', 40, 40', 44, 44') associé à chaque pli (88, 89, 91), une composante de force dirigée transversalement au mouvement longitudinal, pendant que le maillon longitudinal concerné de la chaîne est maintenu en prise avec le rail longitudinal par son extrémité opposée à celle de l'arceau de pliage correspondant, caractérisé en ce que :
- la capote (9) est reliée à une succession alternée d'arceaux de pliage et d'arceaux intermédiaires (65, 66) qui sont eux-mêmes reliés par le système de ruban articulé (35, 35'),
- lorsque la capote est fermée, tous les arceaux intermédiaires (66) sont guidés de manière forcée par les rails longitudinaux (17) et lorsqu'on ouvre la capote, les arceaux intermédiaires restent maintenus en prise dans les rails longitudinaux,
- l'ouverture de toit (12) est réalisée dans un pavillon (11) fixe, par rapport auquel les rails longitudinaux (17) sont au moins approximativement parallèles,
- les surfaces de commande sont formées par des coulisses de commande (16) constituant une partie de la limite supérieure des rails longitudinaux (17), qui applique la composante de la force dirigée transversalement à la direction longitudinale du mouvement, sur le maillon longitudinal de chaîne (36, 36', 40, 40', 44, 44') correspondant, en un point situé entre les extrémités longitudinales de ce maillon longitudinal, et
- les maillons longitudinaux de la chaîne sont alternativement plus longs et plus courts en partant du côté avant de la capote et chaque pli de la capote est défini par le déploiement de chaque fois une paire comprenant un maillon longitudinal, le plus long (36, 36', 40, 40', 44, 44') et d'un maillon longitudinal le plus court (38, 38', 42, 42', 46, 46') de chaque chaîne articulée (35, 35').

2. Toit pliant selon la revendication 1, caractérisé en ce que le système à ruban articulé (chaîne articulée (35, 35') impose à chaque pli (88, 89, 91) de la capote (69) qui se forme à l'ouverture, un angle prédéterminé par rapport aux rails longitudinaux (chemin de guidage longitudinal 17).

3. Toit pliant selon la revendication 2, caractérisé en ce que le système de ruban articulé (chaîne à maillons 35, 35') impose à tous les plis (88, 89, 91) le même angle par rapport aux rails longitudinaux (chemins de guidage longitudinal 17).

4. Toit pliant selon l'une des revendications précédentes, caractérisé en ce que les arceaux (arceaux de plis 65, arceaux intermédiaires 66) sont reliés entre eux au niveau des deux extrémités par chaque fois une chaîne articulée (35, 35') dont les maillons sont formés de maillons longitudinaux de chaîne (36, 36', 38, 38', 40, 40', 42, 42', 44, 44', 46, 46'), et de chaque fois deux maillons longitudinaux reliés entre eux de manière articulée, et de maillons intermédiaires (37, 37', 39, 39', 41, 41', 43, 43', 45, 45') qui portent les arceaux.

5. Toit pliant selon la revendication 4, caractérisé en ce que les maillons intermédiaires (39, 39', 43, 43') associés aux arceaux intermédiaires (66) sont reliés à des moyen de guidage (support de patin 48, patin 49) qui coulissent dans les rails longitudinaux (chemins de guidage longitudinal 17) et sont retenus contre toute sortie des rails longitudinaux.

6. Toit pliant selon la revendication 4 ou 5, caractérisé en ce que les maillons (maillons longitudinaux 38, 38', 42, 42', 44, 44') dans les zones des chaînes dans lesquelles s'appuient les arceaux des plis (65), portent des organes de verrouillage (cames de verrouillage 60, mâchoires de verrouillage 57) qui sortent des rails longitudinaux (chemins de guidage longitudinal 17) lors de l'ouverture de la capote (69) et qui plongent dans les rails de guidage longitudinal lors de la fermeture de la capote.

7. Toit pliant selon la revendication 6, caractérisé en ce que les organes de verrouillage (cames de verrouillage 60, mâchoires coulissantes 57) sont prévus sur les maillons longitudinaux des chaînes (38, 38', 42, 42', 44, 44'), au voisinage des maillons intermédiaires (37, 37', 41, 41', 45, 45'), portant les arceaux de pliage (65).

8. Toit pliant selon l'une des revendications précédentes, caractérisé en ce que les coulisses de commande (16) servant à commander les mouvements de déploiement et les mouvements de repliage des maillons de chaîne (maillons longitudinaux de chaîne (36, 36', 38, 38', 40, 40', 42, 42', 44, 44', 46, 46'), les maillons intermédiaires (37, 37', 39, 39', 41, 41', 43, 43', 45, 45') de chaque chaîne articulée (35, 35') sont munis de chemins à cames (chemins à cames de soulèvement 74, 80, chemins à cames de redressement 75, chemins à cames de déploiement 76, 81) qui coopèrent avec des éléments de cames (cames de soulèvement 61, cames de redressement 59 et cames de déploiement 61) des maillons de chaîne (36, 36', 38, 38', 40, 40', 42, 42', 44, 44', 46, 46'), et qui sont situés à distance, longitudinalement, des extrémités des maillons longitudinaux des chaînes.

9. Toit pliant selon la revendication 8, caractérisé en ce que les éléments de cames (cames de soulèvement 61, cames de redressement 59, cames de déploiement 62) sont prévus chaque fois sur les maillons longitudinaux les plus longs des chaînes (36, 36', 40, 40', 44, 44').

10. Toit pliant selon la revendication 8 ou 9, caractérisé en ce que chacune des deux coulisses de commande (16) comporte plusieurs chemins de cames (chemins de cames de soulèvement 74, 80, chemin de cames de redressement 75, chemins de cames de déploiement 76, 81), et qui, au cours des mouvements de déploiement et de repliage des maillons de chaîne (maillons longitudinaux de chaîne 36, 36', 38, 38', 40, 40', 42, 42', 44, 44', 46, 46'), maillons intermédiaires (37, 37', 39, 39', 41, 41', 43, 43', 45, 45') viennent en prise en fonction de chaque angle de déploiement, successivement avec des éléments de cames différents (cames de soulèvement 61, cames de redressement 59, cames de déploiement 62) des éléments longitudinaux de chaîne (36, 36', 40, 40', 44, 44').

11. Toit pliant selon la revendication 10, caractérisé en ce que la durée de prise des différents éléments de cames (cames de soulèvement 61, cames de redressement 59, cames de déploiement 62) avec les chemins de cames respectivement associés (chemins de cames de soulèvement 74, 80, chemins de came de redressement 75, chemins de cames de déploiement 76, 81) se chevauchent.

12. Toit pliant selon l'une des revendications précédentes, caractérisé en ce qu'en position de fermeture de la capote (69), tous les arceaux de pliage (65) sont également maintenus par les rails longitudinaux (chemins de guidage longitudinal 17).

13. Toit pliant selon l'une des revendications précédentes, caractérisé par un dispositif de redressement (extrémité avant 18 des chemins de guidage longitudinal 17, téton de guidage 32) pour abaisser au moins l'extrémité avant d'un arceau d'extrémité avant (31) lors de l'entrée en position de fermeture, pour soulever cette extrémité d'arceau avant en quittant la position de fermeture.

14. Toit pliant selon l'une des revendications précédentes, caractérisé en ce qu'il est constitué par un ensemble pré-assemblé.

15. Toit pliant selon l'une des revendications précédentes, caractérisé en ce que les arceaux (arceaux de pliage 65, arceaux intermédiaires 66) sont reliés au système de ruban articulé (chaîne à maillons 35, 35') par des liaisons enclipsées (éléments intermédiaires 37, 37', 39, 39', 41, 41', 43, 43', 45, 45', supports d'arceaux 64).

16. Toit pliant selon l'une des revendications précédentes, caractérisé par une installation de retenue (mâchoires coulissantes 58, butée 83) qui à la fermeture du toit interdit la suppression d'un pli (89, 88) avant que la capote (69) ait été tendue au niveau du pli (91, 89) qui se trouve directement en amont.

17. Toit pliant selon la revendication 16, caractérisé en ce que l'installation de retenue est formée par des éléments de retenue (mâchoires coulissante 58, butée 83) qui coopèrent et appartiennent aux maillons de chaîne ou à la coulisse de commande (16).
